# EUROPÄISCHE PATENTANMELDUNG

(11) **EP 1 939 768 A2**
(43) Veröffentlichungstag der Anmeldung: **02.07.2008**
(21) Anmeldenummer: 07123255.7
(22) Anmeldetag: 14.12.2007
(51) Int. Cl.: G06F 17/30

(54) **Verfahren und Vorrichtung zur Auswahl von charakterisierbaren Datensätzen**

(30) Priorität: 19.12.2006 DE 202006019225 U; 31.10.2007 DE 102007052334
(71) Anmelder: teravolt GbR, vertreten durch den geschäftsführenden Gesellschafter Herrn Oliver Koch, 20255 Hamburg (DE)
(72) Erfinder: Fröhlich, Tobias, 10405, Berlin (DE); Koch, Oliver, 20255, Hamburg (DE)
(74) Vertreter: Eisenführ, Speiser & Partner

(57) **Zusammenfassung**

Die Erfindung betrifft eine Vorrichtung und ein Verfahren zur Bereitstellung einer individuell sortierten Reihenfolge von Elementen. Eine erfindungsgemäße Vorrichtung dieser Art umfasst: eine Speichervorrichtung worin eine Mehrzahl von Elementen und zu jedem Element ein Beschreibungssatz gespeichert ist, in dem zu dem jeweiligen Element bezüglich jedem von zumindest drei Kriterien ein Übereinstimmungswert gespeichert ist, durch den die Übereinstimmung des jeweiligen Elements mit dem Kriterium bewertet ist, eine Benutzerschnittstelle, welche es einem Benutzer ermöglicht, aus einer Mehrzahl von Kriterien zumindest zwei Kriterien auszuwählen und einen Gewichtungsfaktor zwischen den zwei Kriterien zu bestimmen, welcher angibt, welches der beiden Kriterien gegenüber dem anderen Kriterium bevorzugt werden soll, eine Sortierungsvorrichtung, welche eine Reihenfolge von Elementen erstellt und ausgebildet ist, um ein erstes Element vor einem zweiten Element anzuordnen, wenn der Übereinstimmungswert für das erste Kriterium, welches der Benutzer als bevorzugt ausgewählt hat, in dem Beschreibungssatz des ersten Elements höher ist als der Übereinstimmungswert für das erste Kriterium in dem Beschreibungssatz des zweiten Elements und/oder der Übereinstimmungswert für das zweite Kriterium, welches der Benutzer als weniger bevorzugt ausgewählt hat, in dem Beschreibungssatz des ersten Elements niedriger ist als der Übereinstimmungswert für das zweite Kriterium in dem Beschreibungssatz des zweiten Elements.

## Beschreibung

Die Erfindung betrifft eine Vorrichtung und ein Verfahren zur Bereitstellung einer individuell sortierten Reihenfolge von Elementen. Das erfindungsgemäße Verfahren bzw. die erfindungsgemäße Vorrichtung eignet sich insbesondere zur Bereitstellung von in einer individuellen Reihenfolge sortierten Gegenständen oder Datensätzen, welche solche Gegenstände beschreiben oder anderen Datensätzen, wie beispielsweise Datensätzen, welche Audio- oder Videodateien beinhalten oder Personen beschreiben.

Die individuelle Sortierung von solchen Gegenständen oder Datensätzen ist immer dann erforderlich, wenn aus einer Mehrzahl von Elementen eine Reihenfolge erstellt werden soll, welche einem Benutzer eine vereinfachte, komfortablere oder übersichtlichere, persönlichere Nutzung der Daten ermöglicht. Beispielsweise ist es bei der Bereitstellung von Audiodaten oftmals wünschenswert und bekannt, eine individuelle Abspielliste zu erzeugen, indem der Benutzer beispielsweise die insgesamt verfügbaren Audiodateien nach einem Kriterium wie einem Namen eines bestimmten Interpreten, eines bestimmten Musikrichtungsstils oder einem Titel eines bestimmten Albums durchsuchen lässt und nur diejenige Audiodateien in die Abspielliste aufgenommen werden, welche das vom Benutzer eingegebene Kriterium aufweisen.

Eine andere beispielhafte Anwendung, in welcher eine solche Sortierung gewünscht ist, findet sich beispielsweise in der Partnersuche über Partnervermittlungen, bei der es bekannt ist, durch Eingabe von Persönlichkeitsmerkmalen die Partnersuche zu definieren und eine sortierte Reihenfolge von Partnern zu erstellen, welche zu den eingegebenen Persönlichkeitsmerkmalen am besten passen.

Ein grundsätzliches Problem bei der solcherart vorbekannten Sortierungsmethode liegt darin, dass es dem Benutzer lediglich ermöglicht wird, die Elemente anhand einer binären Überprüfung eines oder mehrerer Kriterien zu sortieren. Unter binärer Überprüfung ist hierbei zu verstehen, dass die Elemente daraufhin überprüft werden, ob ein vom Benutzer vorgegebenes Kriterium erfüllt wird oder nicht. Auf diese Weise ist es zwar möglich, Elemente nach harten, objektiven Kriterien zu sortieren und die dem Kriterium entsprechenden Elemente bereitzustellen, jedoch vermag diese Art der Sortierung und Bereitstellung keine zufriedenstellenden Ergebnisse zu erzielen, wenn es um die Sortierung anhand von Kriterien geht, welche einer solchen binären Betrachtungsweise weniger zugänglich sind. So kann beispielsweise bei der Bereitstellung und Sortierung von Audiodateien eine Sortierung nach einem bestimmten Musikrichtungsstil nur unzulänglich anhand einer binären Auswahl erfolgen, da sich Musikstücke oftmals mehreren Stilrichtungen zuordnen lassen, dabei aber eher der einen Stilrichtung als der anderen zugehörig sind oder aber eher zwischen zwei Musikrichtungen anzusiedeln sind. In dem anderen Anwendungsbeispiel kann beispielsweise eine Bereitstellung und Sortierung von personenbezogenen Daten anhand des Kriteriums der Haarfarbe nur unzulänglich für eine Sortierung genutzt werden, da sich die tatsächliche Haarfarbe jeder Person typischerweise hochindividuell darstellt und als Zwischenform zwischen den zur Beschreibung geläufigen Begriffen wie "schwarz", "braun", "blond" und dergleichen verwirklicht.

Für den Bereich der Bereitstellung einer sortierten Reihenfolge von Musikdateien ist es bekannt, eine Bewertung zu Kriterien von Musikdateien abzugeben, beispielsweise eine bestimmte Musikrichtung anhand einer vierstufigen Bewertungsskala zu bewerten und die Musikdateien dann anhand des Bewertungsergebnisses in einer sortierten Reihenfolge bereitzustellen. Auf diese Weise können Musiktitel einer Musikrichtung, die eine gute Bewertung erhalten hat, in der Sortierungsreihenfolge weiter vorne einsortiert werden, als Musiktitel mit einer Musikrichtung, die eine schlechtere Bewertung erhalten hat. Mit diesem Sortierungsverfahren kann zwar eine graduelle Gewichtung von Kriterien bei der Sortierung der Elemente erzielt werden, jedoch besteht einerseits nach wie vor das Problem, dass auch mit diesem Verfahren keine Sortierung anhand von Kriterien erfolgen kann, die einer solchen objektiven Definition nicht zugänglich sind und andererseits weist das bekannte Verfahren den Nachteil auf, dass dem Benutzer stets nur einzelne Kriterien vorgegeben werden, die er in der erläuterten abgestuften Weise bewerten kann, um die Sortierung zu beeinflussen.

Ein weiterer Mangel bei bestehenden Verfahren liegt in dem Vorgang der Veränderung bereits erstellter Ergebnislisten. Wenn man mit den aufwendig einzustellenden Selektionsmöglichkeiten eine Ergebnisliste erzeugt hat und diese hiernach verändern möchte, kann man dies nur erreichen, indem man wieder zurück in die Einstellungsmaske geht und Haken setzt bzw. gesetzte Haken entfernt. Welchen Effekt diese Veränderung hat, kann man nicht direkt erkennen, denn die Ergebnisliste muss hierauf folgend erst wieder erzeugt werden.

Diese bekannten Verfahren werden dem typischen Benutzerverhalten nicht gerecht, da sie nur unzulänglich auf die objektiv weniger präzise fassbaren Kriterien eingehen können. Gerade diese Kriterien sind jedoch für die Bereitstellung einer individuell sortierten Reihenfolge hochrelevant. Der Erfindung liegt daher die Aufgabe zugrunde, eine Vorrichtung und ein Verfahren bereitzustellen, welche(s) eine in einer Reihenfolge sortierte Bereitstellung von Elementen ermöglicht, bei welcher solche nicht einer klar abgrenzbaren Definition zugänglichen Kriterien besser berücksichtigt werden können.

Diese Aufgabe wird gemäß eines ersten Aspekts der Erfindung mit einer Vorrichtung der eingangs genannten Art gelöst, wobei die Vorrichtung umfasst: eine Speichervorrichtung worin eine Mehrzahl von Elementen und zu jedem Element ein Beschreibungssatz gespeichert ist, in dem zu dem jeweiligen Element bezüglich jedem von zumindest drei Kriterien ein Übereinstimmungswert gespeichert ist, durch den die Übereinstimmung des jeweiligen Elements mit dem Kriterium bewertet ist, eine Benutzerschnittstelle, welche es einem Benutzer ermöglicht, aus einer Mehrzahl von Kriterien zumindest ein erstes und ein zweites Kriterium auszuwählen, einander zuzuordnen und einen Gewichtungsfaktor zwischen den zwei ausgewählten und einander zugeordneten Kriterien zu bestimmen, welcher angibt, welches der beiden Kriterien gegenüber dem anderen Kriterium bevorzugt bei einer Sortierung einer Reihenfolge der Elemente berücksichtigt werden soll, eine Sortierungsvorrichtung, welche eine Reihenfolge von Elementen erstellt und ausgebildet ist, um ein erstes Element vor einem zweiten Element anzuordnen, wenn der Übereinstimmungswert für das erste Kriterium, welches der Benutzer als bevorzugt gegenüber dem zweiten Kriterium ausgewählt hat, in dem Beschreibungssatz des ersten Elements höher ist als der Übereinstimmungswert für das erste Kriterium in dem Beschreibungssatz des zweiten Elements und/oder der Übereinstimmungswert für das zweite Kriterium, welches der Benutzer als weniger bevorzugt gegenüber dem ersten Kriterium ausgewählt hat, in dem Beschreibungssatz des ersten Elements niedriger ist als der Übereinstimmungswert für das zweite Kriterium in dem Beschreibungssatz des zweiten Elements. Der Benutzer kann die Kriterien somit einerseits frei auswählen, alternativ können die veränderbaren Kriterien aber auch durch die Vorrichtung fest vorgegeben werden.

Nach Erstellung einer ersten Reihenfolge kann der Benutzer sofort jedes Kriterium in vordefinierten Stufungen oder stufenlos verändern, der hierdurch erzielte Effekt auf die Reihenfolge / Sortierung wird praktisch in Echtzeit visualisiert. Letzteres kann in der ersten Version evtl. noch nicht verfügbar sein.

Hinzu kommt dann noch die Erstellung der Playlist, die wiederum eigenen Regeln folgt: Inhaltliche Aussteuerung (z.B. keine zwei Top-Ten-Hits hintereinander, Steuerung der Nutzung von Clips, Rotationen), zeitliche Aussteuerung (z.B. Wochentags Wake-Up- und Wochenend-Party-Angebote).

Mit der erfindungsgemäßen Vorrichtung wird eine wesentliche Verbesserung bei der Bereitstellung individuell sortierter Reihenfolgen von Elementen ermöglicht.

Zunächst beinhaltet die erfindungsgemäße Vorrichtung eine Speichervorrichtung, welche insbesondere in einem Datenspeicher bestehen kann, in dem eine Mehrzahl von Elementen gespeichert ist, die aber auch einen physikalischen Speicher für gegenständliche Dinge beinhalten kann. Neben den Elementen ist zu jedem Element ein Beschreibungssatz in der Speichervorrichtung gespeichert. Der Beschreibungssatz enthält Angaben, welche eine Charakterisierung des jeweiligen Elements im Hinblick auf bestimmte Kriterien erlaubt, erfindungsgemäß ist vorgesehen, dass zumindest für drei Kriterien eine solche Charakterisierung für jedes Element erfolgt. Die Charakterisierung erfolgt in dem Beschreibungssatz, indem ein Übereinstimmungswert gespeichert wird, welcher ein Maß dafür darstellt, wie weit das Element, welchem der Beschreibungssatz zugeordnet ist, mit dem Kriterium übereinstimmt. Ein Beispiel für einen solchen Übereinstimmungswert könnte beispielsweise so ausgeführt werden, dass ein Musikstück in einem ersten Kriterium mit einer Übereinstimmung von 10% der Musikrichtung Rock zugeordnet wird und in einem zweiten Kriterium mit einer Übereinstimmung von 60% der Musikrichtung Pop zugeordnet wird, wodurch eine individuelle Musikrichtung von Pop-Rock für das betreffende Musikstück festgelegt ist, die etwas Pop-lastig ist. Der Übereinstimmungswert kann jedoch auch in einer binären Angabe zu mehreren unterschiedlichen Kriterien bestehen, beispielsweise indem lediglich die Kriterien Pop und Rock in dem Beschreibungssatz angeführt werden, ohne eine prozentuale Zuordnung zu dem jeweiligen Kriterium aufzuführen.

Die erfindungsgemäße Vorrichtung weist weiterhin eine Benutzerschnittstelle auf. Die Benutzerschnittstelle ermöglicht es einem Benutzer einerseits aus der Mehrzahl der verfügbaren, vorbestimmten Kriterien zumindest zwei Kriterien auszuwählen und diese zumindest zwei Kriterien einander zuzuordnen. Als zweite Funktion der Benutzerschnittstelle ist erfindungsgemäß die Bestimmung eines Gewichtungsfaktors zwischen den zwei solcherart ausgewählten und einander zugeordneten Kriterien vorgesehen. Durch diese Möglichkeit der Auswahl, Zuordnung und Gewichtung von zwei Kriterien zueinander wird dem Benutzer eine Möglichkeit der Einflussnahme auf die Sortierung der Reihenfolge der bereitzustellenden Elemente gegeben, welche den bisherigen, vorbekannten Möglichkeiten überlegen ist und eine aus Benutzersicht pragmatischere Einflussnahme erlaubt. Der Benutzer kann beim erfindungsgemäßen Verfahren somit nicht nur durch Bewertung eines Musikstücks oder einer Musikrichtung mit einer bestimmten Bewertungsstufe Einfluss auf die Auswahl dieses spezifischen Musikstücks oder dieser spezifischen Musikrichtung nehmen, sondern er kann mit der erfindungsgemäßen Vorrichtung zwei Musikrichtungen gegeneinander gewichten. Dies ermöglicht einerseits, dass der Benutzer zwei Kriterien, wie beispielsweise Musikrichtungen, auswählt, die er beide in einem bestimmten Verhältnis in der sortierten Reihenfolge aufgeführt wissen möchte. Andererseits ermöglicht dies, dass der Benutzer ein Kriterium, welches er bevorzugt und ein Kriterium, welches er ablehnt, einander zuordnet und die Gewichtung zugunsten des bevorzugten Kriteriums verschiebt, um hierdurch eine gezielte Mehr-Berücksichtigung von Elementen in der sortierten Reihenfolge zu erzielen, welche dem bevorzugten Kriterium entsprechen und diese Mehr-Berücksichtigung zulasten von Elementen zu realisieren, welche dem weniger bevorzugten Kriterium entsprechen.

Schließlich umfasst die erfindungsgemäße Vorrichtung eine Sortierungsvorrichtung, welche die Elemente dann solcherart in einer Reihenfolge sortiert und dem Benutzer bereitstellt, dass anhand des vom Benutzer bestimmten Gewichtungsfaktors zwischen den beiden Kriterien Elemente, welche dem stärker gewichteten Kriterium eher entsprechen, vor Elementen angeordnet werden, welche diesem weniger entsprechen oder/und dem weniger stark gewichteten Kriterium mehr entsprechen als andere Elemente. Auf diese Weise wird erzielt, dass in der sortierten Reihenfolge diejenigen Elemente weiter vorne angeordnet sind, welche dem vom Benutzer bevorzugt gewichteten Kriterium stärker entsprechen und diejenigen Elemente weiter hinten angeordnet sind, welche diesem stärker gewichteten Kriterium weniger stark entsprechen bzw. welche dem vom Benutzer weniger stark gewichteten Kriterium eher stärker entsprechen. Es erfolgt somit eine positive Voranstellung einerseits anhand des ersten Kriteriums und eine negative Hintanstellung andererseits anhand des zweiten Kriteriums.

Die Sortierungsvorrichtung trifft diese Bestimmung der Reihenfolge, indem sie die Kriterien einerseits anhand des vom Benutzer eingegebenen Gewichtungsfaktors heranzieht und dann mit den Übereinstimmungswerten in dem Beschreibungssatz zu der Mehrzahl der Elemente abgleicht, um auf diese Weise Elemente, deren Übereinstimmungswert mit dem stärker gewichteten Kriterium sehr hoch ist, zu identifizieren und in der Reihenfolge vorne anzuordnen und andererseits Elemente, deren Übereinstimmungswert mit dem stärker gewichteten Kriterium nur gering ist, weiter hinten anzuordnen und in gleicher Weise Elemente, deren Übereinstimmungswert mit dem weniger stark gewichteten Kriterium hoch ist, ebenfalls hinten anzuordnen bzw. Elemente, deren Übereinstimmungswert mit dem weniger stark gewichteten Kriterium niedrig ist, gegebenenfalls weiter vorne anzuordnen.

Die Kriterien, mit denen die Sortiervorrichtung arbeitet, sind bevorzugt quantitativ objektivierbare Metadaten, d.h. Ordnungskriterien, die nach offenbarten Bezugsgrößen festgelegt werden, wie beispielsweise Videoebene (Stadt, Land, Gebäude, Gegenstände, Personen), Audioebene (BPM, Instrumentierung, Vocals, Geräusche), Herstellungs-/Objektbezogene Ebene (Autor, Künstler, Herstellungsjahr, Länge, Format).

In einer ersten bevorzugten Ausführungsform der Erfindung umfasst die Sortierungsvorrichtung eine Berechnungseinheit, die ausgebildet ist, um aus dem Gewichtungsfaktor zwischen den zwei ausgewählten und einander zugeordneten Kriterien einen ersten Rangfaktor für das erste Kriterium zu ermitteln, welcher umso höher ist, je stärker der Gewichtungsfaktor zugunsten des ersten Kriteriums gesetzt wurde, und einen zweiten Rangfaktor für das zweite Kriterium zu ermitteln, welcher umso höher ist, je stärker der Gewichtungsfaktor zugunsten des zweiten Kriteriums gesetzt wurde, eine Bewertungseinheit, welche ausgebildet ist, um eine Mehrzahl der Elemente, vorzugsweise für jedes der in der Speichervorrichtung gespeicherten Elemente, einen Rangwert zu berechnen, welcher sich aus einem Rangwertanteil für jedes Kriterium zusammensetzt, wobei ein Rangwertanteil eines Kriterium für ein Element umso höher ist, je höher der Rangfaktor für das Kriterium ist und je höher der Übereinstimmungswert im Beschreibungssatz des Elements zu diesem Kriterium ist, und eine Sortiereinheit, welche ausgebildet ist, die Mehrzahl von Elementen, vorzugsweise alle in der Speichervorrichtung gespeicherten Elemente, in einer Reihenfolge anzuordnen, in der ein Element vor einem anderen Element angeordnet ist, wenn die Summe seiner Rangwertanteile höher ist als diejenige des anderen Elements.

Die solcherart fortgebildete Sortierungsvorrichtung ermöglicht eine aus dem Gewichtungsfaktor, welchen der Benutzer über die Benutzerschnittstelle eingegeben hat, berechnete, separate Berücksichtigung des ersten und zweiten Kriteriums anhand des jeweiligen Übereinstimmungswerts für dieses Kriterium in den Beschreibungssätzen der Elemente. Diese Fortbildungsform eignet sich einerseits gut dazu, um eine Sortierung anhand lediglich zwei einander zugeordneter Kriterien vorzunehmen. Insbesondere ist diese Fortbildungsform jedoch dafür geeignet, eine Sortierung vorzunehmen, wenn der Benutzer mehr als zwei Kriterien ausgewählt und einander zugeordnet hat, beispielsweise zusätzliche zwei Kriterien oder zusätzliche vier Kriterien, um dann anhand jeweils zwei bzw. drei paarweise einander zugeordneter Kriterien und zueinander gewichteter Kriterien die entsprechenden Rangwertanteile für jedes Kriterium zu jedem Element zu berechnen und auf Basis einer Aufsummierung dieser Rangwertanteile die Sortierung vorzunehmen.

Weiterhin ist es bevorzugt, wenn der Rangfaktor für ein Kriterium positiv ist, wenn es gegenüber dem anderen, ihm zugeordneten Kriterium stärker gewichtet ist, und der Rangfaktor für ein Kriterium negativ ist, wenn es gegenüber dem anderen, ihm zugeordneten Kriterium schwächer gewichtet ist. Hierdurch kann eine Positiv- und Negativbewertung der Kriterien miteinander kombiniert werden.

Noch weiter ist es bevorzugt, wenn in der Speichervorrichtung eine Zuordnungstabelle der Kriterien gespeichert ist, in welcher jedem Kriterium ein oder mehrere Kriterien als komplementär oder quasi-komplementär zugeordnet ist, wobei Kriterien, die einander als komplementär zugeordnet sind, zueinander widersprüchlich sind, und Kriterien, die einander als quasi-komplementär zugeordnet sind, zueinander gegensätzlich sind, die Benutzerschnittstelle ausgebildet ist, um einem Benutzer zu ermöglichen aus einer Mehrzahl von Kriterien zumindest ein erstes Kriterium auszuwählen, die Benutzerschnittstelle eine Auswahleinheit umfasst, welche ausgebildet ist, um dem Benutzer eine Auswahl aus zumindest einem, vorzugsweise mehreren anderen Kriterien bereitzustellen, welche komplementär oder quasi-komplementär zu dem ersten Kriterium sind, und die Benutzerschnittstelle ausgebildet ist, um dem Benutzer die Auswahl anzuzeigen, ihn das zweite Kriterium aus der Auswahl des/der Kriteriums/Kriterien auswählen lässt und das ausgewählte zweite Kriterium dem ersten Kriterium zuzuordnen.

Bei dieser Fortbildung wird dem Benutzer auf Grundlage eines ersten von ihm ausgewählten Kriteriums ein Vorschlag anderer Kriterien bereitgestellt, welche dem zuvor ausgewählten ersten Kriterium tatsächlich oder nahezu gegenüberstehen. Auf diese Weise kann mit der erfindungsgemäßen Vorrichtung eine vereinfachte Gewichtung von zuvor in der Zuordnungstabelle als komplementär bzw. quasi-komplementär einander zugeordneten Kriterien erfolgen, um dem Benutzer eine erleichterte und in sich logische Auswahl, Zuordnung und Gewichtung von zwei Kriterien zu ermöglichen. In praktischer Weise kann die Zuordnung als komplementär bzw. quasi-komplementär erfolgen, indem beispielsweise bezüglich des Kriteriums Interpretationssprache einem ersten Kriterium "deutsch" zu einem Musikstück die komplementäre Charakterisierung "englisch", "französisch" gegenübergestellt und dem Benutzer zur Auswahl gestellt werden oder beispielsweise hinsichtlich des Kriteriums Musikrichtung "Hardrock" die quasikomplementären Musikrichtungen "Blues", "Soul" oder dergleichen gegenübergestellt und dem Benutzer zur Auswahl zur Verfügung gestellt werden.

Dabei ist es insbesondere bevorzugt, wenn die Auswahleinheit ausgebildet ist, um ein zweites Kriterium, welches als Einziges dem ausgewählten ersten Kriterium komplementär zugeordnet ist, auszuwählen und dem ersten Kriterium zuzuordnen. Diese Fortbildung ermöglicht es, dass dann, wenn der Benutzer durch die Auswahl des ersten Kriteriums ein einziges und eindeutiges komplementäres Gegenkriterium identifiziert hat, dieses nicht mehr ausdrücklich vom Benutzer als zweites Kriterium ausgewählt werden muss, sondern diese Auswahl durch die Vorrichtung automatisiert erfolgt.

Weiterhin ist es bevorzugt, wenn die Benutzerschnittstelle ausgebildet ist, um dem Benutzer zu ermöglichen, zwei Kriterien auszuwählen und einander zuzuordnen, welche zueinander weder komplementär noch quasi-komplementär sind. Diese Fortbildung der erfindungsgemäßen Vorrichtung macht sich einen spezifischen Vorteil der erfindungsgemäßen Zuordnung und Gewichtung von zwei Kriterien zueinander zunutze, indem zwei charakterfremde Kriterien gegeneinander gewichtet werden. Unter "charakterfremd" ist hierbei zu verstehen, dass die beiden Kriterien keinem gemeinsamen Oberbegriff zugeordnet sind, sondern dass sie unterschiedliche Charakterisierungsfelder beschreiben. Auf diese Weise kann der Benutzer die erfindungsgemäße Vorrichtung durch wenige Eingaben zu einer von ihm bevorzugten Sortierung bewegen. Beispielsweise kann der Benutzer dann, wenn er primär englischsprachige Musikstücke hören möchte, hierbei aber primär weibliche Interpreten hören möchte, als erstes Kriterium "englischsprachigen Text" wählen und als zweites Kriterium "männliche Interpreten" wählen und dann den Gewichtungsfaktor zugunsten des englischsprachigen Textes setzen.

Es ist weiterhin bevorzugt, wenn im Beschreibungssatz zu jedem Element Übereinstimmungswerte zu Kriterien gespeichert sind, welche die Elemente bezüglich zweier unterschiedlicher Charakterisierungsfelder beschreiben und die Benutzerschnittstelle ausgebildet ist, um dem Benutzer zu ermöglichen, zwei Kriterien auszuwählen, einander zuzuordnen und gegeneinander zu gewichten, welche die Elemente bezüglich zweier unterschiedlicher Charakterisierungsfelder beschreiben. Durch diese Fortbildung wird insbesondere die zuvor beschriebene individualisierte Gewichtung unterschiedlicher Charakterisierungsfelder ermöglicht, um hierdurch mittels weniger Eingaben die gezielte individuelle Sortierung für einen Benutzer zu erreichen.

Weiterhin kann die erfindungsgemäße Vorrichtung fortgebildet werden, indem die Benutzerschnittstelle eine analoge Auswahlvorrichtung, insbesondere einen Dreh- oder Schieberegler, umfasst zur Auswahl des Gewichtungsfaktors zwischen zwei Kriterien, wobei die Endwerte bzw. Endanschläge des Dreh- bzw. Schiebereglers eine 100%-Gewichtung des einen bzw. des anderen Kriteriums darstellen. Mit dieser Fortbildungsform wird eine intuitiv bedienbare und zudem typischerweise abgestufte und/oder stufenlos regelbare Bestimmung des Gewichtungsfaktors erreicht. Dabei ist zu verstehen, dass die analoge Auswahlvorrichtung in Form tatsächlicher physikalischer Bedienelemente ausgebildet sein kann oder in Gestalt virtueller, beispielsweise auf einem Bildschirm und mittels Tastatureingaben oder einem Mauszeiger veränderbarer Darstellungen ausgestaltet sein kann.

Es ist weiterhin bevorzugt, wenn die Kriterien eine erste Gruppe von unabdingbaren Kriterien umfassen, welche zur Erstellung einer Auswahl und Reihenfolge von Elementen definiert sein müssen und bei der Erstellung der Auswahl und Reihenfolge berücksichtigt werden und eine zweite Gruppe von abdingbaren Kriterien umfassen, welche wahlweise bestimmt werden können und nur dann, wenn sie bestimmt sind, bei der Erstellung der Auswahl und Reihenfolge berücksichtigt werden. Mit dieser Fortbildung wird es möglich, dass eine erste Gruppe von unabdingbaren Kriterien und zugehörigen Gewichtungsfaktoren vom Benutzer ausgewählt werden muss, eine zweite Gruppe von abdingbaren Kriterien und zugehörigen Gewichtungsfaktoren wahlweise bestimmt werden kann und nachfolgend die Auswahl und Reihenfolge von Elementen auf Grundlage aller unabdingbaren Kriterien und nur derjenigen abdingbaren Kriterien, welche bestimmt sind, erfolgt. So kann eine Erstellung der Reihenfolge blockiert werden, wenn nicht alle unabdingbaren Kriterien ausgewählt und gewichtet worden sind.

Schließlich kann die erfindungsgemäße Vorrichtung weiter fortgebildet werden, indem die Benutzerschnittstelle ausgebildet ist, um die Auswahl von zumindest vier, vorzugsweise einer größeren geradzahligen Anzahl von Kriterien zu ermöglichen, jeweils zwei Kriterien aus der Auswahl einander zuzuordnen und zueinander zu gewichten, wobei die Sortierungsvorrichtung umfasst: eine Berechnungseinheit, die ausgebildet ist, um aus dem Gewichtungsfaktor zwischen je zwei ausgewählten und einander zugeordneten Kriterien jeweils einen Rangfaktor für jedes Kriterium zu ermitteln, welcher umso höher ist, je stärker der Gewichtungsfaktor zugunsten des jeweiligen Kriteriums gesetzt wurde, eine Bewertungseinheit, welche ausgebildet ist, um für eine Mehrzahl von Elementen, vorzugsweise jedes der in der Speichervorrichtung gespeicherten Elemente, einen Rangwert zu berechnen, welcher sich aus einem Rangwertanteil für jedes ausgewählte Kriterium zusammensetzt, wobei ein Rangwertanteil eines Kriteriums für ein Element umso höher ist, je höher der Rangfaktor für das Kriterium ist und je höher der Übereinstimmungswert im Beschreibungssatz des Elements zu diesem Kriterium ist, und eine Sortiereinheit, welche ausgebildet ist, die Mehrzahl von Elementen, vorzugsweise alle in der Speichervorrichtung gespeicherten Elemente, in einer Reihenfolge anzuordnen, in der ein Element vor einem anderen Element angeordnet ist, wenn die Summe seiner Rangwertanteile höher ist als diejenige des anderen Elements.

Mit dieser Fortbildung wird erreicht, dass der Benutzer mehrere paarweise einander zugeordnete Kriterien zur Bestimmung der Sortierungsreihenfolge zueinander paarweise gewichten kann, um hierdurch eine differenzierte Sortierung zu erzielen. So kann der Benutzer einerseits mit zwei einander zugeordneten ersten und zweiten Kriterien eine Gewichtung zwischen englischsprachigem Text und männlichen Interpreten vornehmen und mit zwei weiteren, einander zugeordneten dritten und vierten Kriterien eine Gewichtung nach Musikstücken der achtziger Jahre und Musikrichtung Pop vornehmen, um dann entsprechend der gesetzten Gewichtungsfaktoren für die beiden Kriteriumspaare die Sortierung durch die erfindungsgemäße Sortierungsvorrichtung erstellen zu lassen.

Weiterhin ist es bevorzugt, wenn die erfindungsgemäße Vorrichtung fortgebildet wird durch eine Korrekturvorrichtung / ein Regelwerk, welche /welches ausgebildet ist, um die Reihenfolge der Elemente zu verändern, insbesondere einen dramaturgisch sinnvollen Ablauf im Programm zu gewährleisten:
- aufgrund der Berücksichtigung eines tageszeitabhängigen Faktors, mit dem vorbestimmte Kriterien multipliziert werden und hierdurch stärker oder schwächer gewichtet werden,
- aufgrund der Berücksichtigung einer negativen Zuordnungsliste, welche Elemente einander zuordnet, die in der Reihenfolge nicht unmittelbar aufeinanderfolgend angeordnet sein sollten, und diese Elemente voneinander durch zumindest ein weiteres Element trennt,
- aufgrund der Berücksichtigung eines redaktionellen Faktors, mit dem vorbestimmte Elemente in der Reihenfolge nach vorne gerückt werden,
- aufgrund der Berücksichtigung eines Wiederholungswerts, der angibt, dass bestimmte Elemente mehrfach in der Reihenfolge angeordnet werden sollen und die entsprechende Wiederholungsmenge definiert, und/oder
- aufgrund der Berücksichtigung einer manuellen Änderung durch einen Administrator.

Mit dieser Fortbildung wird erreicht, dass die vom Benutzer durch die Kriteriumswahl und -gewichtung getroffene Auswahl und die hieraus erstellte Reihenfolge nachträglich in einer bestimmten Weise verändert werden kann. Beispielsweise ist es häufig aus Gründen der Harmonie oder Dramaturgie wünschenswert, bestimmte Elemente nicht unmittelbar aufeinanderfolgend in einer Reihenfolge anzuordnen, sondern durch zumindest ein Element voneinander getrennt anzuordnen. Diese negative Zuordnung kann einerseits anhand einer tatsächlichen Zuordnung von Elementen zueinander erfolgen oder durch eine Überprüfung und einen Abgleich der Kriterien der aufeinanderfolgenden Elemente stattfinden, beispielsweise indem Takt und Geschwindigkeit (beats per minute) aufeinanderfolgender Musikstücke miteinander verglichen werden und gegebenenfalls eine Umsortierung erfolgt, um Takt-Sprünge zwischen zwei aufeinanderfolgenden Datensätzen gezielt zu vermeiden oder gezielt zu erzeugen. Des Weiteren ist eine tages- oder jahreszeitabhängige Umsortierung bevorzugt, bei der beispielsweise Elemente, welche einer typischen Stimmungslage eines Benutzers zu einer bestimmten Tages- oder Jahreszeit entsprechen, bevorzugt vorne angeordnet werden.

Zudem ist es oftmals wünschenswert, bestimmte Elemente, die verstärkt dem Benutzer zur Kenntnis gebracht werden sollen, in der Reihenfolge weiter vorne anzuordnen und folglich aus einer Position in der Reihenfolge nach vorne zu schieben. Zudem können solche Elemente in der Reihenfolge mehrfach angeordnet werden, also in bestimmten Abständen wiederholt werden. Dies ist beispielsweise für Elemente sinnvoll, auf die der Benutzer verstärkt aufmerksam gemacht werden soll. Zu diesem Zweck kann in der erfindungsgemäßen Vorrichtung eine Liste mit Eigenschaften solcher Elemente abgespeichert sein, welche vorzugsweise regelmäßig aktualisiert wird. Aus dieser Liste werden dann die darin anhand ihrer Eigenschaften definierten Elemente in der entsprechenden Wiederholungsrate im Rahmen der Überarbeitung durch die Korrektureinheit in die Reihenfolge übernommen.

Des Weiteren ist es vorteilhaft, wenn eine einmal durch die erfindungsgemäße Vorrichtung erstellte Reihenfolge nachträglich durch eine Person wie einen Administrator noch verändert werden kann, beispielsweise um bestimmte künstlerische Ansprüche einzuarbeiten, und die Korrekturvorrichtung diese Bearbeitungsmöglichkeit bietet.

Die Daten, mit denen die Korrektureinheit arbeitet, sind bevorzugt qualitativ bewertende Metadaten, d.h. Werte, die eine Zielgruppe bzw. Nutzung definieren und diesen Zielgruppen bzw. Nutzungen zugeordnet sind, wie beispielsweise Stimmung (Sun-Downer, Dinner, Romance, Party), Jahres-/Tageszeit, Interessen (Sport (Snowboard, Cross-Golf), Kultur, Politik, Wirtschaft), Geschlechter (männlich, weiblich).

Schließlich ist es weiterhin bevorzugt, wenn die erfindungsgemäße Vorrichtung weiterhin umfasst: eine Wiedergabeeinheit, insbesondere eine Wiedergabeeinheit zur akustischen Wiedergabe von Elementen, welche Audio-Datensätze darstellen, oder eine Wiedergabeeinheit zur grafischen Darstellung von Elementen, welche Video-Datensätze darstellen. Mit dieser Fortbildung wird eine kompakte Auswahl-, Sortierungs- und Wiedergabevorrichtung bereitgestellt, welche einem Benutzer in nützlicher Weise alle technischen Funktionen bereitstellt, die zur individuellen sortierten Wiedergabe von Elementen erforderlich ist.

Gemäß eines weiteren Aspekts der Erfindung wird die zuvor genannte Aufgabenstellung durch ein Verfahren zum Sortieren von Elementen wie Gegenständen oder Datensätzen gelöst, welches die Schritte aufweist: Speichern einer Mehrzahl von Elementen und eines Beschreibungssatzes zu jedem Element, welcher zu dem jeweiligen Element bezüglich jedem von zumindest drei Kriterien einen Übereinstimmungswert enthält, durch den die Übereinstimmung des jeweiligen Elements mit dem Kriterium bewertet ist, Auswählen und einander Zuordnen eines ersten und zweiten Kriteriums und Bestimmen eines Gewichtungsfaktors zwischen den zwei ausgewählten und einander zugeordneten Kriterien, welcher bestimmt, welches der beiden Kriterien gegenüber dem anderen Kriterium bevorzugt bei einer Sortierung einer Reihenfolge der Elemente platziert werden soll, Erstellen einer Reihenfolge von Elementen indem jeweils ein erstes Element vor einem zweiten Element angeordnet wird, wenn der Übereinstimmungswert für das erste Kriterium, welches der Benutzer als bevorzugt gegenüber dem zweiten Kriterium ausgewählt hat, in dem Beschreibungssatz des ersten Elements höher ist als der Übereinstimmungswert für das erste Kriterium in dem Beschreibungssatz des zweiten Elements und/oder der Übereinstimmungswert für das zweite Kriterium, welches der Benutzer als weniger bevorzugt gegenüber dem ersten Kriterium ausgewählt hat, in dem Beschreibungssatz des ersten Elements niedriger ist als der Übereinstimmungswert für das zweite Kriterium in dem Beschreibungssatz des zweiten Elements.

Das erfindungsgemäße Verfahren eignet sich insbesondere dazu, auf der erfindungsgemäßen Vorrichtung durchgeführt zu werden. Dabei ist zu verstehen, dass die einzelnen Verfahrensschritte nicht physikalisch an einem Ort durchgeführt werden müssen, sondern sich auf Anteile der erfindungsgemäßen Vorrichtung verteilen können, die physikalisch voneinander getrennt sind. So kann beispielsweise das erfindungsgemäße Verfahren über ein Datennetzwerk durchgeführt werden, bei welchem der Benutzer an einer bei ihm angeordneten Benutzerschnittstelle, beispielsweise einem Computer oder Mobiltelefon, die erforderlichen Auswahlparameter zur Auswahl, Zuordnung und Gewichtung der Kriterien vornimmt und diese Auswahlparameter an eine beabstandet angeordnete Speicher- und Sortierungsvorrichtung übermittelt werden, um hier die entsprechenden Elemente und deren Beschreibungssätze bereitzuhalten, die Sortierung anhand der vom Benutzer eingegebenen Parameter vorzunehmen und die dann erstellte Reihenfolge an den Benutzer zu übermitteln und diesem bereitzustellen. Die Bereitstellung kann dabei einerseits in der tatsächlichen physikalischen Zurverfügungstellung der Elemente, wie beispielsweise der Daten, liegen oder in der in Echtzeit ausgeführten Übermittlung der Daten, um diese auf einer Abspielstation des Benutzers anzuhören, ohne dass die Daten hierbei dem Benutzer physikalisch zur Wiederverwendung bereitgestellt werden.

Das erfindungsgemäße Verfahren kann gemäß den Ansprüchen 14-22 fortgebildet werden. Die solcherart ausgestalteten Verfahrensfortbildungen eignen sich insbesondere dazu, auf den entsprechenden, zuvor erläuterten Fortbildungen der erfindungsgemäßen Vorrichtung ausgeführt zu werden. Wie zuvor erläutert, müssen dabei nicht notwendigerweise alle Verfahrensschritte auf einer physikalisch einheitlichen Vorrichtung vorgenommen werden, sondern können auch auf physikalisch voneinander beabstandeten, unterschiedlichen Vorrichtungen durchgeführt werden. Zu den spezifischen Vorteilen und zusätzlichen Erläuterungen bezüglich der Verfahrensfortbildungen wird auf die Beschreibung zu den entsprechenden, korrespondierenden Vorrichtungsaspekten verwiesen.

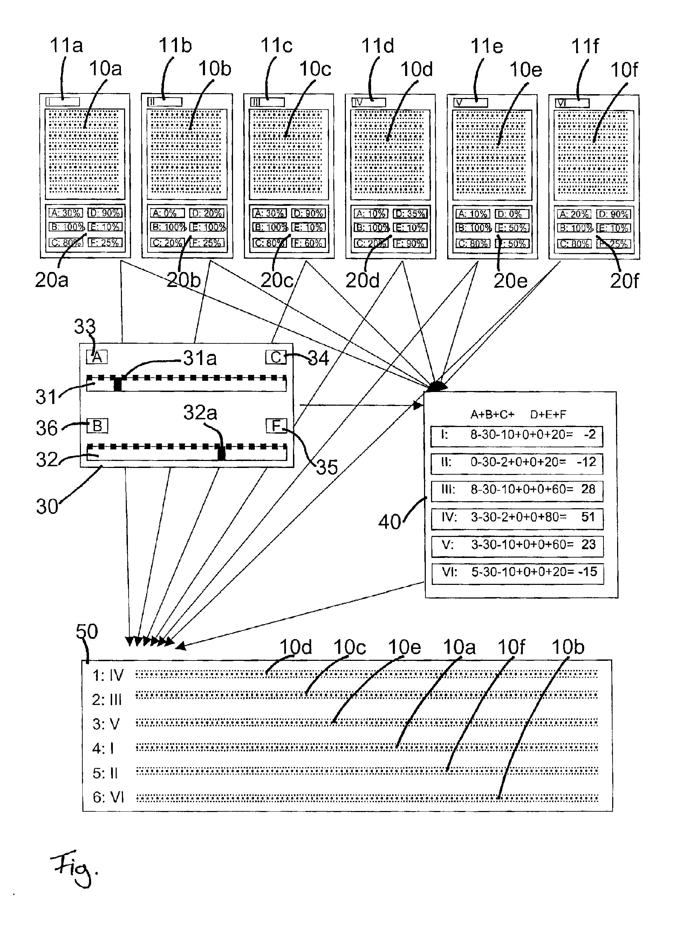

Eine bevorzugte Ausführungsform der Erfindung wird anhand der anhängenden Figur erläutert. Die Figur zeigt einen schematisierten Ablauf des erfindungsgemäßen Verfahrens, wie es innerhalb einer erfindungsgemäßen Vorrichtung ausgeführt werden kann.

Die beispielhafte Ausführungsform der Erfindung umfasst eine Speichervorrichtung, in welcher sechs Musikdateien 10a-f gespeichert sind. Jeder Musikdatei 10a-f ist ein Beschreibungssatz 20a-f zugeordnet und mit dieser Musikdatei in der Speichervorrichtung abgespeichert. Jede Musikdatei ist darüber hinaus mit einer Individualkennung 11a-f versehen, welche eine einfache Identifizierung der Musikdatei anhand eines kurzen Codes erlaubt.

In den Beschreibungssätzen 20a-f sind insgesamt sechs Kriterien A-F angeführt und zu jedem dieser sechs Kriterien A-F eine Prozentzahl gespeichert, welche einen Übereinstimmungswert mit dem jeweiligen Kriterium A-F darstellt. Im genannten Beispiel bezeichnet das Kriterium A die Aktualität des jeweiligen Musiktitels, das Kriterium B, ob der Interpret des Musiktitels männlich ist, die Kriterien C, D und E, inwieweit der Musiktitel der Stilrichtung Pop, Rock und Soul entsprechend zuzuordnen ist und das Kriterium F, inwieweit es sich um einen Musiktitel mit schneller Taktzahl handelt.

Eine Benutzerschnittstelle 30 stellt dem Benutzer zwei Schieberegler 31, 32 zur Verfügung, auf welchen er mittels eines Schiebers 31 a, 32a entlang einer Skala stufenlos oder in Abstufungen zwischen zwei Endanschlägen einen analogen Wert einstellen kann. Die Benutzerschnittstelle ermöglicht es dem Benutzer weiterhin, für die jeweiligen Endanschläge der Schieberegler 31, 32 ein Kriterium auszuwählen und in entsprechende Endanschlagsfelder 33-36 einzusetzen. In der abgebildeten Einstellung der Benutzerschnittstelle 30 hat der Benutzer für den ersten Schieberegler 31 in das Feld 33 des linken Endanschlags das Kriterium A eingesetzt und in das Feld 34 des rechten Endanschlags das Kriterium C eingesetzt. Für den zweiten Schieberegler 32 hat der Benutzer in das Feld für den linken Endanschlag das Kriterium B eingesetzt und in das Feld für den rechten Endanschlag das Kriterium F eingestellt. Weiterhin hat der Benutzer die Schieber 31 a, 32a so eingestellt, dass sie beim ersten Schieberegler tendenziell in Richtung des linken Endanschlags verschoben sind und beim zweiten Schieberegler tendenziell in Richtung des rechten Endanschlags verschoben sind. Hiermit bringt der Benutzer zum Ausdruck, dass er tendenziell eher aktuellere Titel (Kriterium A durch Schieber 31 a stärker gewichtet) und tendenziell weniger Poptitel berücksichtigt wissen möchte (Kriterium C durch Schieberegler 31 a abgewertet) und zudem tendenziell weniger männliche Interpreten hören möchte und eher Musiktitel mit hoher Taktzahl bevorzugt (Kriterium B durch Schieberegler 32 abgewertet und Kriterium F durch Schieberegler 32 aufgewertet).

In einer Bewertungseinheit 40 werden die über die Benutzerschnittstelle 30 eingegebenen Benutzereinstellungen eingegeben und mit den in den Beschreibungssätzen 20a-f gespeicherten Werten abgeglichen. Für jedes Kriterium wird ein Rangfaktor ermittelt. Für jeden der Beschreibungssätze bzw. jedes der Musikstücke 10a-f wird bezüglich jedes Kriteriums auf Grundlage des Rangfaktors und des jeweiligen Übereinstimmungswerts ein Rangwertanteil ermittelt und die entsprechenden sechs Rangwertanteile für die Kriterien A-F addiert. Hierbei ist zu berücksichtigen, dass die Rangwertanteile für die Kriterien A, D-F positiv berücksichtigt werden, die Rangwertanteile für die Kriterien B und C oder negativ gewichtet werden, da der Rangfaktor für diese Kriterien negativ ist. Die Rangwertanteile für die nicht in die Auswahl einbezogenen Kriterien D und E werden mit 0 bewertet.

Aus den solcherart ermittelten Summen der Rangwertanteile für jedes Kriterium ergibt sich für das Musikstück 1 ein Rangwert von -2, für das Musikstück 2 ein Rangwert von -12, für das Musikstück 3 ein Rangwert von 28 u.s.w. Anhand dieser Rangwerte werden die Musikstücke dann in einer Sortierungseinrichtung 50 sortiert, indem diejenigen Musikstücke, welche den höchsten Rangwert aufweisen, in der sortierten Reihenfolge zuvorderst stehen und diejenigen Musikstücke, welche den vom Benutzer eingegebenen Kriterien und Gewichtung dieser Kriterien am wenigsten entsprechen, zuletzt stehen. In dem dargestellten Ausführungsbeispiel ergibt sich eine Sortierung IV-III-V-I-II-VI.

In der solcherart erstellten sortierten Reihenfolge werden dann die Playlists / Musikstücke 10a-f dem Benutzer zusammengestellt. Danach erfolgt die finale Erstellung durch das Regelwerk, welches den dramaturgisch richtigen Verlauf sicherstellt.

Das in der Figur erläuterte Ausführungsbeispiel sieht vor, dass Kriterien, welche vom Benutzer ausgewählt wurden und zu denen der Schieber verschoben wurde, in der Aufsummierung der Rangwertanteile positiv berücksichtigt werden und Kriterien, welche ausgewählt wurden, zu denen der Schieber jedoch nicht verschoben wurde, in der Aufsummierung negativ berücksichtigt werden. Hierdurch wird dem Benutzer ermöglicht, neben einer Positivbestimmung bestimmter Kriterien auch eine Negativbestimmung bestimmter Kriterien vorzunehmen. In der Konsequenz dieses Bewertungssystems würde eine Anordnung des Schiebers in der exakten Mitte zwischen zwei ausgewählten Kriterien dann dazu führen, dass diese Kriterien unberücksichtigt werden, d.h. mit 0 bewertet.

In Abwandlung dieses Bewertungsschemas kann auch eine durchweg positive Berücksichtigung der Rangwertanteile ausgewählter Kriterien vorgesehen werden. Bei diesem Bewertungsverfahren wird jedes der ausgewählten Kriterien bei der Aufsummierung der Rangwertanteile positiv berücksichtigt und die Position des Schiebereglers bestimmt einen Faktor, welcher die Höhe des Rangwertanteils beeinflusst und umso höher ausfällt, je mehr der Schieberegler zu dem jeweiligen Kriterium des Rangwertanteils verschoben ist. Bei diesem Bewertungsverfahren wird dem Benutzer ermöglicht, zwei Kriterien positiv gegeneinander abzuwägen, dabei jedoch nicht das eine Kriterium als Negativanteil in die Gesamtbewertung einzubeziehen.

## Patentansprüche

1. Vorrichtung zur Bereitstellung einer individuell sortierten Reihenfolge von Elementen wie Gegenständen, Personen oder Datensätzen, umfassend:
- eine Speichervorrichtung worin eine Mehrzahl von Elementen und zu jedem Element ein Beschreibungssatz gespeichert ist, in dem zu dem jeweiligen Element bezüglich jedem von zumindest drei Kriterien ein Übereinstimmungswert gespeichert ist, durch den die Übereinstimmung des jeweiligen Elements mit dem Kriterium bewertet ist,
- eine Benutzerschnittstelle, welche es einem Benutzer ermöglicht,
i. aus einer Mehrzahl von Kriterien zumindest ein erstes und ein zweites Kriterium auszuwählen und einander zuzuordnen, und
ii. einen Gewichtungsfaktor zwischen den zwei ausgewählten und einander zugeordneten Kriterien auszuwählen, welcher bestimmt, welches der beiden Kriterien gegenüber dem anderen Kriterium bevorzugt bei einer Sortierung einer Reihenfolge der Elemente berücksichtigt werden soll,
- eine Sortierungsvorrichtung, welche eine Reihenfolge von Elementen erstellt und ausgebildet ist, um ein erstes Element vor einem zweiten Element anzuordnen, wenn
i. der Übereinstimmungswert für das erste Kriterium, welches der Benutzer als bevorzugt gegenüber dem zweiten Kriterium ausgewählt hat, in dem Beschreibungssatz des ersten Elements höher ist als der Übereinstimmungswert für das erste Kriterium in dem Beschreibungssatz des zweiten Elements und/oder
ii. der Übereinstimmungswert für das zweite Kriterium, welches der Benutzer als weniger bevorzugt gegenüber dem ersten Kriterium ausgewählt hat, in dem Beschreibungssatz des ersten Elements niedriger ist als der Übereinstimmungswert für das zweite Kriterium in dem Beschreibungssatz des zweiten Elements.

2. Vorrichtung nach Anspruch 1,
**dadurch gekennzeichnet, dass** die Sortierungsvorrichtung umfasst
- eine Berechnungseinheit, die ausgebildet ist, um aus dem Gewichtungsfaktor zwischen den zwei ausgewählten und einander zugeordneten Kriterien
i. einen ersten Rangfaktor für das erste Kriterium zu ermitteln, welcher umso höher ist, je stärker der Gewichtungsfaktor zugunsten des ersten Kriteriums gesetzt wurde, und
ii. einen zweiten Rangfaktor für das zweite Kriterium zu ermitteln, welcher umso höher ist, je stärker der Gewichtungsfaktor zugunsten des zweiten Kriteriums gesetzt wurde,
- eine Bewertungseinheit, welche ausgebildet ist, um eine Mehrzahl der Elemente, vorzugsweise für jedes der in der Speichervorrichtung gespeicherten Elemente, einen Rangwert zu berechnen, welcher sich aus einem Rangwertanteil für jedes Kriterium zusammensetzt, wobei ein Rangwertanteil eines Kriterium für ein Element umso höher ist, je höher der Rangfaktor für das Kriterium ist und je höher der Übereinstimmungswert im Beschreibungssatz des Elements zu diesem Kriterium ist, und
- eine Sortiereinheit, welche ausgebildet ist, die Mehrzahl von Elementen, vorzugsweise alle in der Speichervorrichtung gespeicherten Elemente, in einer Reihenfolge anzuordnen, in der ein Element vor einem anderen Element angeordnet ist, wenn die Summe seiner Rangwertanteile höher ist als diejenige des anderen Elements.

3. Vorrichtung nach Anspruch 2,
**dadurch gekennzeichnet, dass** der Rangfaktor für ein Kriterium positiv ist, wenn es gegenüber dem anderen, ihm zugeordneten Kriterium stärker gewichtet ist, und der Rangfaktor für ein Kriterium negativ ist, wenn es gegenüber dem anderen, ihm zugeordneten Kriterium schwächer gewichtet ist.

4. Vorrichtung nach einem der vorhergehenden Ansprüche,
**dadurch gekennzeichnet, dass**
- in der Speichervorrichtung eine Zuordnungstabelle der Kriterien gespeichert ist, in welcher jedem Kriterium ein oder mehrere Kriterien als komplementär oder quasi-komplementär zugeordnet ist, wobei
i. Kriterien, die einander als komplementär zugeordnet sind, zueinander widersprüchlich sind, und
ii. Kriterien, die einander als quasi-komplementär zugeordnet sind, zueinander gegensätzlich sind,
- die Benutzerschnittstelle ausgebildet ist, um einem Benutzer zu ermöglichen aus einer Mehrzahl von Kriterien zumindest ein erstes Kriterium auszuwählen,
- die Benutzerschnittstelle eine Auswahleinheit umfasst, welche ausgebildet ist, um dem Benutzer eine Auswahl aus zumindest einem, vorzugsweise mehreren anderen Kriterien bereitzustellen, welche komplementär oder quasi-komplementär zu dem ersten Kriterium sind, und
- die Benutzerschnittstelle ausgebildet ist, um dem Benutzer die Auswahl anzuzeigen, ihn das zweite Kriterium aus der Auswahl des/der Kriteriums/Kriterien auswählen lässt und das ausgewählte zweite Kriterium dem ersten Kriterium zuzuordnen.

5. Vorrichtung nach dem vorhergehenden Anspruch,
**dadurch gekennzeichnet, dass** die Auswahleinheit ausgebildet ist, um ein zweites Kriterium, welches als Einziges dem ausgewählten ersten Kriterium komplementär zugeordnet ist, auszuwählen und dem ersten Kriterium zuzuordnen.

6. Vorrichtung nach einem der vorhergehenden Ansprüche,
**dadurch gekennzeichnet, dass** die Benutzerschnittstelle ausgebildet ist, um dem Benutzer zu ermöglichen, zwei Kriterien auszuwählen und einander zuzuordnen, welche zueinander weder komplementär noch quasi-komplementär sind.

7. Vorrichtung nach einem der vorhergehenden Ansprüche,
**dadurch gekennzeichnet, dass** im Beschreibungssatz zu jedem Element Übereinstimmungswerte zu Kriterien gespeichert sind, welche die Elemente bezüglich zweier unterschiedlicher Charakterisierungsfelder beschreiben und die Benutzerschnittstelle ausgebildet ist, um dem Benutzer zu ermöglichen, zwei Kriterien auszuwählen, einander zuzuordnen und gegeneinander zu gewichten, welche die Elemente bezüglich zweier unterschiedlicher Charakterisierungsfelder beschreiben.

8. Vorrichtung nach einem der vorhergehenden Ansprüche,
**dadurch gekennzeichnet, dass** die Benutzerschnittstelle eine analoge Auswahlvorrichtung, insbesondere einen Dreh- oder Schieberegler umfasst zur Auswahl des Gewichtungsfaktors zwischen zwei Kriterien, wobei die Endwerte bzw. Endanschläge des Dreh- bzw. Schiebereglers eine 100%-Gewichtung des einen bzw. des anderen Kriteriums darstellen.

9. Vorrichtung nach einem der vorhergehenden Ansprüche,
**dadurch gekennzeichnet, dass** die Kriterien eine erste Gruppe von unabdingbaren Kriterien umfassen, welche zur Erstellung einer Auswahl und Reihenfolge von Elementen definiert sein müssen und bei der Erstellung der Auswahl und Reihenfolge berücksichtigt werden und eine zweite Gruppe von abdingbaren Kriterien umfassen, welche wahlweise bestimmt werden können und nur dann, wenn sie bestimmt sind, bei der Erstellung der Auswahl und Reihenfolge berücksichtigt werden.

10. Vorrichtung nach einem der vorhergehenden Ansprüche,
**dadurch gekennzeichnet, dass**
a. die Benutzerschnittstelle ausgebildet ist, um die Auswahl von zumindest vier, vorzugsweise einer geradzahligen Anzahl von Kriterien zu ermöglichen, jeweils zwei Kriterien aus der Auswahl einander zuzuordnen und zueinander zu gewichten,
b. die Sortierungsvorrichtung umfasst:
i. eine Berechnungseinheit, die ausgebildet ist, um aus dem Gewichtungsfaktor zwischen je zwei ausgewählten und einander zugeordneten Kriterien einen Rangfaktor für jedes Kriterium zu ermitteln, welcher umso höher ist, je stärker der Gewichtungsfaktor zugunsten des jeweiligen Kriteriums gesetzt wurde
ii. eine Bewertungseinheit, welche ausgebildet ist, um für eine Mehrzahl von Elementen, vorzugsweise jedes der in der Speichervorrichtung gespeicherten Elemente, einen Rangwert zu berechnen, welcher sich aus einem Rangwertanteil für jedes Kriterium zusammensetzt, wobei ein Rangwertanteil eines Kriteriums für ein Element umso höher ist, je höher der Rangfaktor für das Kriterium ist und je höher der Übereinstimmungswert im Beschreibungssatz des Elements zu diesem Kriterium ist, und
iii. eine Sortiereinheit, welche ausgebildet ist, die Mehrzahl von Elementen, vorzugsweise alle in der Speichervorrichtung gespeicherten Elemente, in einer Reihenfolge anzuordnen, in der ein Element vor einem anderen Element angeordnet ist, wenn die Summe seiner Rangwertanteile höher ist als diejenige des anderen Elements.

11. Vorrichtung nach einem der vorhergehenden Ansprüche, **gekennzeichnet durch** eine Korrekturvorrichtung, welche ausgebildet ist, um die Reihenfolge der Elemente zu verändern, insbesondere
- aufgrund der Berücksichtigung eines tageszeitabhängigen Faktors, mit dem vorbestimmte Kriterien multipliziert werden und hierdurch stärker oder schwächer gewichtet werden,
- aufgrund der Berücksichtigung einer negativen Zuordnungsliste, welche Elemente einander zuordnet, die in der Reihenfolge nicht unmittelbar aufeinanderfolgend angeordnet sein sollten, und diese Elemente voneinander **durch** zumindest ein weiteres Element trennt,
- aufgrund der Berücksichtigung eines redaktionellen Faktors, mit dem vorbestimmte Elemente in der Reihenfolge nach vorne gerückt werden,
- aufgrund der Berücksichtigung eines Wiederholungswerts, der angibt, dass bestimmte Elemente mehrfach in der Reihenfolge angeordnet werden sollen und die entsprechende Wiederholungsmenge definiert, und/oder
- aufgrund der Berücksichtigung einer manuellen Änderung **durch** einen Administrator.

12. Vorrichtung nach einem der vorgehenden Ansprüche,
**gekennzeichnet durch** eine Wiedergabeeinheit, insbesondere eine Wiedergabeeinheit zur akustischen Wiedergabe von Elementen, welche Audio-Datensätze darstellen, oder eine Wiedergabeeinheit zur grafischen Darstellung von Elementen, welche Video-Datensätze darstellen.

13. Verfahren zum Sortieren von Elementen wie Gegenständen, Personen oder Datensätzen, mit den Schritten:
a. Speichern einer Mehrzahl von Elementen und eines Beschreibungssatzes zu jedem Element, welcher zu dem jeweiligen Element zumindest bezüglich jedem von drei Kriterien einen Übereinstimmungswert enthält, durch den die Übereinstimmung des jeweiligen Elements mit dem Kriterium bewertet ist,
i. Auswählen und einander Zuordnen eines ersten und zweiten Kriteriums und einander, und
ii. Bestimmen eines Gewichtungsfaktors zwischen den zwei ausgewählten und einander zugeordneten Kriterien, welcher bestimmt, welches der beiden Kriterien gegenüber dem anderen Kriterium bevorzugt bei einer Sortierung einer Reihenfolge der Elemente platziert werden soll,
b. Erstellen einer Reihenfolge von Elementen indem jeweils ein erstes Element vor einem zweiten Element angeordnet wird, wenn
i. der Übereinstimmungswert für das erste Kriterium, welches der Benutzer als bevorzugt gegenüber dem zweiten Kriterium ausgewählt hat, in dem Beschreibungssatz des ersten Elements höher ist als der Übereinstimmungswert für das erste Kriterium in dem Beschreibungssatz des zweiten Elements und/oder
ii. der Übereinstimmungswert für das zweite Kriterium, welches der Benutzer als weniger bevorzugt gegenüber dem ersten Kriterium ausgewählt hat, in dem Beschreibungssatz des ersten Elements niedriger ist als der Übereinstimmungswert für das zweite Kriterium in dem Beschreibungssatz des zweiten Elements.

14. Verfahren nach Anspruch 13,
**dadurch gekennzeichnet, dass**
a. aus dem Gewichtungsfaktor zwischen den zwei ausgewählten und einander zugeordneten Kriterien ein erster Rangfaktor für das erste Kriterium ermittelt wird, welcher umso höher ist, je stärker der Gewichtungsfaktor zugunsten des ersten Kriteriums gesetzt wurde,
b. ein zweiter Rangfaktor für das zweite Kriterium ermittelt wird, welcher umso höher ist, je stärker der Gewichtungsfaktor zugunsten des ersten Kriteriums gesetzt wurde,
c. für jeweils jedes Element einer Mehrzahl von Elementen, vorzugsweise alle gespeicherten Elemente, für jedes Kriterium ein Rangwertanteil berechnet wird wobei ein Rangwertanteil eines Kriteriums für ein Element umso höher ist, je höher der Rangfaktor für das Kriterium ist und je höher der Übereinstimmungswert im Beschreibungssatz des Elements zu diesem Kriterium ist
d. für jedes der Mehrzahl der Elemente bzw. alle gespeicherten Elemente ein Rangwert berechnet wird, welcher sich aus der Summe der Rangwertanteile des jeweiligen Elements für jedes Kriterium zusammensetzt, und
e. die Mehrzahl von Elementen, vorzugsweise alle gespeicherten Elemente in solcherart sortiert werden, dass ein Element vor einem anderen Element angeordnet ist, wenn sein Rangwert höher ist als derjenige des anderen Elements.

15. Verfahren nach Anspruch 13 oder 14,
**dadurch gekennzeichnet, dass** jedem Kriterium ein oder mehrere Kriterien als komplementär oder quasi-komplementär zugeordnet wird, wobei
i. Kriterien, die einander als komplementär zugeordnet sind, zueinander widersprüchlich sind, und
ii. Kriterien, die einander als quasi-komplementär zugeordnet sind, zueinander gegensätzlich sind,
b. aus einer Mehrzahl von Kriterien zumindest ein erstes Kriterium ausgewählt wird,
c. eine Auswahl aus zumindest einem, vorzugsweise mehreren anderen Kriterien bereitzustellen, welche komplementär oder quasi-komplementär zu dem ersten Kriterium sind,
d. die Auswahl angezeigt wird und
e. aus der Auswahl ein zweites Kriterium ausgewählt und dem ersten Kriterium zugeordnet wird.

16. Verfahren nach dem vorhergehenden Anspruch,
**dadurch gekennzeichnet, dass** ein zweites Kriterium, welches als Einziges dem ausgewählten ersten Kriterium komplementär zugeordnet ist, ausgewählt und dem ersten Kriterium zugeordnet wird.

17. Verfahren nach einem der vorhergehenden Ansprüche 13-16,
**dadurch gekennzeichnet, dass** zwei Kriterien ausgewählt und einander zugeordnet werden, welche zueinander weder komplementär noch quasi-komplementär sind.

18. Verfahren nach einem der vorhergehenden Ansprüche 13-17,
**dadurch gekennzeichnet, dass** im Beschreibungssatz zu jedem Element Übereinstimmungswerte zu Kriterien gespeichert sind, welche die Elemente bezüglich zweier unterschiedlicher Charakterisierungsfelder beschreiben und zwei Kriterien ausgewählt, einander zugeordnet und gegeneinander gewichtet werden, welche die Elemente bezüglich zweier unterschiedlicher Charakterisierungsfelder beschreiben.

19. Verfahren nach einem der vorhergehenden Ansprüche 13-18,
**dadurch gekennzeichnet, dass** der Gewichtungsfaktor zwischen zwei einander zugeordneten Kriterien analog und stufenlos zwischen zwei Endwerten, welche eine 100%-Gewichtung des einen bzw. des anderen Kriteriums darstellen, gewählt wird.

20. Verfahren nach einem der vorhergehenden Ansprüche 13-19,
**dadurch gekennzeichnet, dass**
a. zumindest vier, vorzugsweise eine größere geradzahlige Anzahl von Kriterien gewählt wird, daraus jeweils zwei Kriterien einander zugeordnet und zueinander gewichtet werden,
b. aus dem Gewichtungsfaktor zwischen je zwei ausgewählten und einander zugeordneten Kriterien jeweils ein Rangfaktor für jedes Kriterium ermittelt wird, welcher umso höher ist, je stärker der Gewichtungsfaktor zugunsten des jeweiligen Kriteriums gesetzt wurde
c. für jedes Element einer Mehrzahl von Elementen, vorzugsweise jedes der gespeicherten Elemente für jedes Kriterium ein Rangwertanteil berechnet wird, welcher umso höher ist, je höher der Rangfaktor für das Kriterium ist und je höher der Übereinstimmungswert im Beschreibungssatz des Elements zu diesem Kriterium ist,
d. für jedes der (Mehrzahl der) Elemente ein Rangwert durch Aufsummierung seiner Rangwertanteile berechnet wird, und
e. die (Mehrzahl der) Elemente so sortiert werden, dass ein Element vor einem anderen Element angeordnet ist, wenn sein Rangwert höher ist als derjenige des anderen Elements.

21. Verfahren nach einem der vorhergehenden Ansprüche 13-20,
**dadurch gekennzeichnet, dass** aus dem Gewichtungsfaktor ein Rangfaktor für jedes ausgewählte Kriterium berechnet wird, welcher positiv ist, wenn der Gewichtungsfaktor zugunsten des Kriteriums gesetzt ist und welcher negativ ist, wenn der Gewichtungsfaktor zuungunsten des Kriteriums gesetzt ist.

22. Verfahren nach einem der vorhergehenden Ansprüche 13-21,
**dadurch gekennzeichnet, dass**
eine erste Gruppe von unabdingbaren Kriterien und zugehörigen Gewichtungsfaktoren ausgewählt werden muss,
eine zweite Gruppe von abdingbaren Kriterien und zugehörigen Gewichtungsfaktoren wahlweise bestimmt werden kann,
die Auswahl und Reihenfolge von Elementen auf Grundlage aller unabdingbaren Kriterien und nur derjenigen abdingbaren Kriterien, welche bestimmt sind, erfolgt.
